# EUROPEAN PATENT SPECIFICATION

(11) **EP 3 643 977 B1**
(45) Date of publication and mention of the grant of the patent: **26.04.2023**
(21) Application number: 17914369.8
(22) Date of filing: 22.06.2017
(51) Int. Cl.: F24F 11/30, F25B 1/04, F25B 27/00, F25B 49/02, F25B 6/02, F25B 13/00

(54) **REFRIGERATION CYCLE DEVICE**
KÄLTEKREISLAUFVORRICHTUNG
DISPOSITIF À CYCLE FRIGORIFIQUE

(43) Date of publication of application: 29.04.2020
(73) Proprietor: Mitsubishi Electric Corporation, Chiyoda-ku Tokyo 100-8310 (JP)
(72) Inventor: KAWAI, Kazuhiko, Tokyo 100-8310 (JP)
(74) Representative: Pfenning, Meinig & Partner mbB
(86) International application number: PCT/JP2017/023036
(87) International publication number: WO 2018/235230

(56) References cited:
- JP-A- H0 672 135
- JP-A- H10 185 335
- JP-A- 2005 094 982
- JP-A- 2005 094 982
- JP-A- 2008 061 393
- JP-A- 2012 135 157
- JP-A- 2012 210 096
- US-A1- 2012 191 252
- US-A1- 2016 352 143

## Description

### Technical Field

The present invention relates to a refrigeration cycle apparatus. In particular, the present invention relates to prevention of overcurrent generated by reduction in voltage of supplied power.

### Background Art

An existing refrigeration cycle apparatus such as an air-conditioning device is operated by power supplied from a power supply such as a commercial power supply and a power generator. An electric component constituting the refrigeration cycle apparatus such as the air-conditioning device is typically driven by power of, for example, three-phase AC 200 V, single-phase AC 200 V, or DC 12V. For example, a power supply of three-phase AC 200 V is used as a primary power supply, power supplied from the power supply of three-phase AC 200 V is converted, and the converted power is supplied to each electric component (e.g., see Patent Literature 1).

Patent Literature 2 describes an energy allocation system, comprising: an air conditioning unit having: a DC-voltage compressor; a generator; and a voltage inverter; and a blending module executable by a processor to: split AC power produced by the generator into AC and DC power allocations using the inverter; and direct at least a portion of the DC power to the compressor, and discloses a refrigeration cycle apparatus according tot he preamble of independent claim 1.

### Citation List

### Patent Literature

Patent Literature 1: Japanese Unexamined Patent Application Publication No. 2009-041857
Patent Literature 2: US 2016/352143 A

### Summary of Invention

### Technical Problem

As described above, the existing refrigeration cycle apparatus has a device configuration in which use of the three-phase AC power supply as the primary power supply is intended. Therefore, the existing refrigeration cycle apparatus cannot use, for example, a high-voltage DC power supply represented by a power supply of DC 380 V as the primary power supply. Further, for example, in a case where the DC power supply is used as the primary power supply to supply (feed) power to the refrigeration cycle apparatus, the power is supplied by combining a power generation device such as a solar power generation device and a battery such as a lithium battery, in addition to the DC power supply device that generates the DC power from the commercial AC power. Therefore, when the power supply is switched to the power generation device, for example, when power is supplied through discharge from the battery, reduction in DC voltage of the supplied power is expected.

When the DC voltage is reduced and the device driven by the power converted by an inverter unit is driven with the same output, a current is increased in inverse proportion to the reduction of the voltage. Accordingly, when the voltage is reduced to a prescribed level, an amount of the flowing current becomes an overcurrent set value that is set for protection of the inverter unit or other units, which causes operation stop of the refrigeration cycle apparatus.

The present invention has been made to overcome the above-described issues, and an object of the present invention is to provide the refrigeration cycle apparatus coping with reduction in applied voltage.

### Solution to Problem

A refrigeration cycle apparatus according to an embodiment of the present invention includes a power feeding system, a refrigerant circuit in which a compressor, a condenser, an expansion device, and an evaporator are connected by pipes to circulate refrigerant and performs operation by receiving supply of DC power from the power feeding system.
The refrigeration cycle apparatus includes a compressor inverter device that performs DC-AC conversion and supplies power to a compressor motor, a fan motor inverter device that performs DC-AC conversion and supplies power to a fan motor, a voltage detection device that detects an applied DC voltage, and a controller configured to perform processing to determine an upper limit value of a driving frequency output from at least one of the compressor inverter device and the fan motor inverter device, based on the voltage detected by the voltage detection device. Further, the power feeding system includes a plurality of power sources including a battery. Additionally, the controller is connected to the power feeding system to be able to communicate with the power feeding system, the power feeding system is configured to supply power to the refrigeration cycle apparatus, the controller is configured to determine the upper limit value to be a preset upper limit value of the driving frequency when determining that the power supplied from the power feeding system is power from the battery. Furthermore, the controller is configured to control driving of the compressor motor and the fan motor such that the driving frequency does not exceed the upper limit value. Advantageous Effects of Invention

According to the embodiment of the present invention, the upper limit value of the driving frequency output from at least one of the compressor inverter device and the fan motor inverter device is determined based on the voltage detected by the voltage detection device. Therefore, for example, even when the voltage is lowered, it is possible to prevent overcurrent. This allows for continuous operation of the refrigeration cycle apparatus. Further, it is possible to cope with a case where a high-voltage DC power supply is used as a primary power supply of the motor.

### Brief Description of Drawings

[Fig. 1] Fig. 1 is a diagram schematically illustrating a configuration of an air-conditioning device 100 according to Embodiment 1 of the present invention.
[Fig. 2] Fig. 2 is a diagram schematically illustrating an example of a system that supplies power to the air-conditioning device 100 according to Embodiment 1 of the present invention.
[Fig. 3] Fig. 3 is a diagram illustrating power supply to a power system device 12 according to Embodiment 1 of the present invention.
[Fig. 4] Fig. 4 is a table illustrating an example of relationship between a voltage Vdc and an upper limit value Fmax of a driving frequency F in the air-conditioning device 100 according to Embodiment 1 of the present invention.
[Fig. 5] Fig. 5 is a diagram illustrating flow of processing to determine the upper limit value Fmax, performed based on the voltage Vdc in the air-conditioning device 100 according to Embodiment 1 of the present invention.
[Fig. 6] Fig. 6 is a table illustrating an example of relationship between a current Idc and the upper limit value Fmax of the driving frequency in an air-conditioning device 100 according to Embodiment 2 not in accordance with the present invention.
[Fig. 7] Fig. 7 is a diagram illustrating flow of processing to determine the upper limit value Fmax, performed based on the current Idc in the air-conditioning device 100 according to Embodiment 2.
[Fig. 8] Fig. 8 is a diagram illustrating flow of processing to determine the upper limit value Fmax in an air-conditioning device 100 according to Embodiment 3 of the present invention.

### Description of Embodiments

A refrigeration cycle apparatus according to each of embodiments of the present invention is described below with reference to drawings or other representations. In the following drawings, components denoted by the same reference numerals are same as or equivalent to one another, and are common throughout the embodiments described below. Further, in the drawings, relationship of sizes of the components is different from actual relationship in some cases. The form of each of the components described throughout the specification is illustrative, and the form of each of the components is not limited to the form described in the present specification. In particular, combination of the components is not limited to combination in each of the embodiments, and the components described in one embodiment is applicable to the other embodiment. Further, the level of pressure and temperature is not particularly determined from relationship with absolute values, and is relatively determined based on a state, operation, or other factors of the device. Further, although a plurality of devices of the same kind distinguished is described with suffixes being appended, such suffixes will be omitted in a case where distinction and specification are not particularly necessary.

### Embodiment 1

### <Configuration>

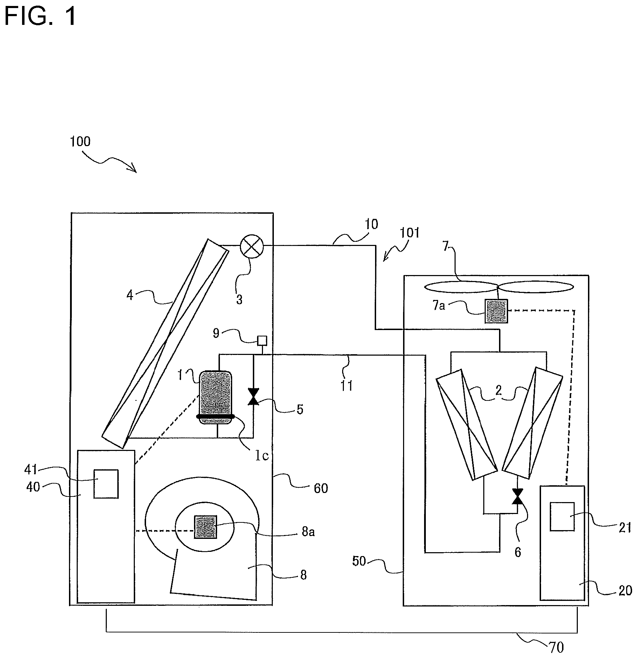

Fig. 1 is a diagram schematically illustrating a configuration of an air-conditioning device 100 according to Embodiment 1 of the present invention. The device configuration of the air-conditioning device 100 that is a refrigeration cycle apparatus is described with reference to Fig. 1. In Embodiment 1 or other embodiments, the air-conditioning device 100 is described as an example of the refrigeration cycle apparatus. Accordingly, the present invention is not applied only to the configuration of the air-conditioning device 100 described herein. Further, for example, the number of outdoor units (heat source units) 50 and the number of indoor units (load-side units) 60 are not limited. Also, the number of components mounted on each of the outdoor unit 50 and the indoor unit 60 is not limited. The unit on which the components are mounted may be determined based on application of the air-conditioning device 100. The present invention is applicable to a device in which a heat pump chiller (heat source unit) and an air-handling unit (load-side unit) are connected by a water pipe.

### <Device Configuration>

As illustrated in Fig. 1, the air-conditioning device 100 includes the indoor unit 60 and the outdoor unit 50. The indoor unit 60 and the outdoor unit 50 are connected by a refrigerant pipe 10 and a refrigerant pipe 11. More specifically, as described below, a compressor 1, outdoor heat exchangers 2, an expansion valve 3, and an indoor heat exchanger 4 inside the indoor unit 60 and the outdoor unit 50 are sequentially connected by the refrigerant pipe 10 and the refrigerant pipe 11, thereby configuring a refrigerant circuit 101.

### <Indoor Unit 60>

The expansion valve 3, the indoor heat exchanger 4, and the compressor 1 that are connected in series to one another are mounted on the indoor unit 60. An indoor solenoid valve 5 that is connected in parallel to the compressor 1 is mounted on the indoor unit 60. Further, a pressure switch 9 is mounted on discharge side of the compressor 1. An indoor fan 8 driven by a fan motor 8a that is, for example, a three-phase AC motor is further mounted on the indoor unit 60. The indoor unit 60 is provided with an indoor control device 40.

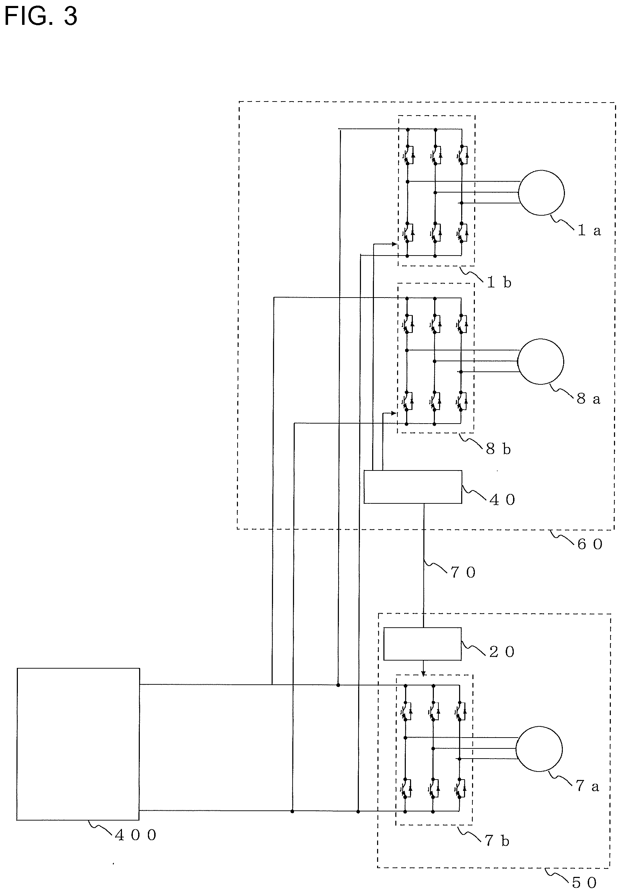

The expansion valve 3 is a valve functioning as a decompression device and an expansion device for decompression and expansion of refrigerant. The expansion valve 3 is preferably configured by an electronic expansion valve that can control an opening degree. For example, the indoor heat exchanger 4 exchanges heat between the air in an air-conditioned room and the refrigerant. During cooling operation, the indoor heat exchanger 4 functions as an evaporator that evaporates and gasifies the refrigerant. During heating operation, the indoor heat exchanger 4 functions as a condenser that condenses and liquefies the refrigerant. The indoor fan 8 is installed near the indoor heat exchanger 4. For example, the indoor fan 8 supplies the air having passed through the indoor heat exchanger 4, into the room. The indoor fan 8 is a fan such as a centrifugal fan and a multiblade fan. For example, as illustrated in Fig. 3 described below, the indoor fan 8 is of a type in which a driving frequency of the fan motor 8a is controlled by an inverter device 8b for the indoor fan as a fan motor inverter device, and a rotation speed of the fan and an air volume are controlled.

When a compressor motor 1a that is, for example, a three-phase AC motor is rotated, the compressor 1 suctions the refrigerant, compresses the suctioned refrigerant into high-temperature high-pressure refrigerant, and discharges the high-temperature high-pressure refrigerant. For example, as illustrated in Fig. 3 described below, the compressor 1 is of a type in which a driving frequency of the compressor motor 1a is controlled by a compressor inverter device 1b, and a capacity is controlled. Further, a belt heater 1c that prevents stagnation of the refrigerant is attached to the compressor 1. The indoor solenoid valve 5 is opened and closed to cause a part of the refrigerant discharged from the compressor 1, to flow toward suction side of the compressor 1. The pressure switch 9 functions as a protection device. When pressure of the refrigerant encapsulated in the refrigerant circuit 101 reaches predetermined pressure, the pressure switch 9 opens a valve to prevent the pressure of the refrigerant from increasing.

Further, the indoor control device 40 includes an indoor calculation device 41. The indoor calculation device 41 includes a general-purpose CPU, a data bus, an input/output port, a nonvolatile memory, a timer, and other components (all not illustrated). The indoor control device 40 controls the opening degree of the expansion valve 3, the rotation speed of the fan of the indoor fan 8, the rotation speed of the compressor 1, opening/closing of the indoor solenoid valve 5, and other operations, based on information (indoor air temperature, set temperature, refrigerant pipe temperature, refrigerant pressure, etc.) relating to operation of the air-conditioning device 100. In this example, the indoor control device 40 performs control relating to an upper limit value Fmax of a driving frequency F of each of the compressor motor 1a, a fan motor 7a, and the fan motor 8a, based on a voltage of power supplied from a DC power supply system 200 described below. Further, the indoor control device 40 is connected to an outdoor control device 20 described below by a transmission line 70, and performs transmission/reception of a signal including various kinds of data with the outdoor control device 20.

### <Outdoor Unit 50>

The outdoor heat exchangers 2 are provided in the outdoor unit 50. Fig. 1 illustrates an example in which the two outdoor heat exchangers 2 are connected in parallel to each other and mounted. In the outdoor unit 50, an outdoor solenoid valve 6 is connected in series to one of the two outdoor heat exchangers 2. The outdoor solenoid valve 6 allows a part of the refrigerant to pass through the connected outdoor heat exchanger 2. Further, an outdoor fan 7 driven by the fan motor 7a that is, for example, a three-phase AC motor is mounted on the outdoor unit 50. The outdoor unit 50 is further provided with the outdoor control device 20.

For example, the outdoor heat exchangers 2 exchange heat between the outdoor air and the refrigerant. During the cooling operation, the outdoor heat exchangers 2 function as condensers that condense and liquefy the refrigerant. During the heating operation, the outdoor heat exchangers 2 function as evaporators that evaporate and gasify the refrigerant. The outdoor fan 7 is installed near the outdoor heat exchangers 2. For example, the outdoor fan 7 causes the air to pass through the outdoor heat exchangers 2. The indoor fan 8 is a fan such as a centrifugal fan and a multiblade fan. For example, as illustrated in Fig. 3 described below, the outdoor fan 7 is of a type in which a driving frequency of the fan motor 7a is controlled by an inverter device 7b for the outdoor fan as a fan motor inverter device, and a rotation speed of the fan and an air volume are controlled.

The outdoor control device 20 includes an outdoor calculation device 21. The outdoor calculation device 21 includes a general-purpose CPU, a data bus, an input/output port, a nonvolatile memory, a timer, and other components (all not illustrated). The outdoor control device 20 controls the rotation speed of the fan of the outdoor fan 7, opening/closing of the outdoor solenoid valve 6, and other operations, based on information (indoor air temperature, set temperature, refrigerant pipe temperature, refrigerant pressure, etc.) relating to operation of the air-conditioning device 100. As described above, the outdoor control device 20 is connected to the indoor control device 40 by the transmission line 70, and performs transmission/reception of the signal including various kinds of data with the indoor control device 40.

### <Operation>

Next, operation of the air-conditioning device 100 is described. Flow of the refrigerant inside the refrigerant circuit 101 in the cooling operation performed by the air-conditioning device 100 is mainly described. The refrigerant is encapsulated in the refrigerant circuit 101 of the air-conditioning device 100. In the refrigerant circuit 101, the compressor 1 suctions the refrigerant, compresses the suctioned refrigerant into high-temperature high-pressure refrigerant, and discharges the high-temperature high-pressure refrigerant. The discharged refrigerant flows into the outdoor heat exchangers 2 through the refrigerant pipe 11. The refrigerant flowing into the outdoor heat exchangers 2 exchanges heat with the air supplied from the outdoor fan 7, and is condensed and liquified. The condensed and liquified refrigerant flows into the expansion valve 3 through the refrigerant pipe 10.

The refrigerant having flowed into the expansion valve 3 is decompressed and expanded into refrigerant in a two-phase gas-liquid state of low temperature and low pressure. The two-phase gas-liquid refrigerant flows into the indoor heat exchanger 4. The two-phase gas-liquid refrigerant having flowed into the indoor heat exchanger 4 exchanges heat with the air supplied from the indoor fan 8, and is evaporated and gasified. The refrigerant evaporated and gasified flows out from the indoor heat exchanger 4 and is suctioned by the compressor 1 again.

The air supplied to the indoor heat exchanger 4 is cooled by evaporation heat of the refrigerant having flowed into the indoor heat exchanger 4, and the cooled air is supplied, by the indoor fan 8, to a cooling target area provided with the indoor unit 60. The air cools the cooling target area and any heat generation source installed in the cooling target area, which results in increase of the air temperature. The air increased in temperature is again supplied to the indoor heat exchanger 4 by the indoor fan 8, and is cooled by evaporation heat of the refrigerant. The indoor air is circulated in the above-described manner.

The indoor control device 40 determines necessity of capacity supply based on difference between a target set temperature and one of temperature of the air suctioned into the indoor unit 60 and temperature of the air blown from the indoor unit 60. When the indoor control device 40 determines not to supply the capacity, the indoor control device 40 performs thermo-off control to stop driving of the compressor 1. After the compressor driving is stopped (thermos-off), when the indoor control device 40 determines to supply the capacity based on the difference between the set temperature and one of the temperature of the air suctioned into the indoor unit 60 and the temperature of the air blown from the indoor unit 60, the indoor control device 40 performs thermo-on control to start driving of the compressor 1.

### <Example of System Relating to Power Supply of Air-Conditioning Device 100>

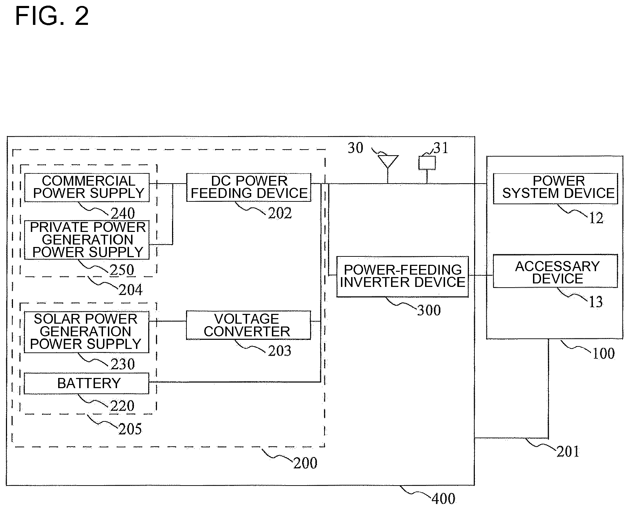

Fig. 2 is a diagram schematically illustrating an example of a system that supplies power to the air-conditioning device 100 according to Embodiment 1 of the present invention. The power supply to the air-conditioning device 100 is described with reference to Fig. 2. As illustrated in Fig. 2, the air-conditioning device 100 according to Embodiment 1 is configured to be operated by receiving both of DC power and AC power; however, the configuration is not limited thereto. For example, the air-conditioning device 100 may be configured to be operated by receiving only DC power.

As illustrated in Fig. 2, a power feeding system 400 includes a DC power supply system 200 and a power-feeding inverter device 300. The DC power supply system 200 supplies DC power. In this example, the DC power supply system 200 that supplies high-voltage power is described. The DC power supply system 200 serves as a primary power supply of the air-conditioning device 100. The DC power supply system 200 includes a plurality of power supplies. In this example, a commercial power supply 240, a private power generation power supply 250, a solar power generation power supply 230, and a battery 220 are provided as the power supplies. The commercial power supply 240 and the private power generation power supply 250 are included in an AC power supply 204. The solar power generation power supply 230 and the battery 220 are included in a DC power supply 205.

The battery 220 can charge power supplied from, for example, a DC power feeding device 202. Further, the battery 220 supplies power to the air-conditioning device 100 through discharge. The power supplied from the battery 220 is varied in output voltage depending on a battery charge state (residual amount). The minimum output voltage typically becomes about 70% of the maximum output voltage. Therefore, it is not possible to constantly apply the stable voltage. Further, feedable time duration is limited by the power used by the load. The solar power generation power supply 230 is a device generating power by receiving predetermined sunlight. In this case, the solar power generation power supply 230 is described as an example; however, the power supply is not limited thereto. For example, a power generation device using natural energy such as wind power generation, or a fuel cell may be used in place of the solar power generation power supply 230.

The DC power feeding device 202 converts the AC power supplied from the AC power supply 204 into DC power. A voltage converter 203 that is a DC/DC converter increases or decreases the DC voltage supplied from the solar power generation power supply 230 to convert the DC voltage to a predetermined voltage. The solar power generation power supply 230 is varied in voltage depending on a power generation amount. Therefore, the voltage converter 203 adjusts the voltage to be applied to the air-conditioning device 100, to a predetermined voltage.

Further, the power-feeding inverter device 300 performs DC-AC conversion on the power supplied from the DC power supply system 200, and supplies the AC power to devices requiring supply of AC power, in the air-conditioning device 100. In Fig. 2, the power-feeding inverter device 300 is illustrated as a device that is included in the power feeding system 400 and is installed outside the air-conditioning device 100; however, the power-feeding inverter device 300 may be included in the air-conditioning device 100. Further, as described above, in the case where the air-conditioning device 100 does not require the AC power supply and is operable by the power from the DC power supply system 200, the power-feeding inverter device 300 may not be provided.

Among the components mounted on the air-conditioning device 100, the indoor solenoid valve 5, the outdoor solenoid valve 6, the pressure switch 9, and the belt heater 1c are relatively smaller in power consumption than the compressor 1, the outdoor fan 7, and the indoor fan 8. The device such as the solenoid valve (indoor solenoid valve 5 and outdoor solenoid valve 6), the pressure switch 9, and the belt heater 1c is referred to as an accessary device 13.

A voltage detection device 30 detects the voltage applied by the power feeding system 400 (DC power supply system 200). The voltage applied by the power feeding system 400 (DC power supply system 200) is a DC bus bar voltage of the air-conditioning device 100. A current detection device 31 detects a current flowing from the power feeding system 400 to the air-conditioning device 100. A signal relating to the detection is transmitted to the indoor control device 40. In Fig. 2, the voltage detection device 30 and the current detection device 31 are installed inside the power feeding system 400; however, the voltage detection device 30 and the current detection device 31 may be installed inside the air-conditioning device 100.

Fig. 3 is a diagram illustrating power supply to a power system device 12 according to Embodiment 1 of the present invention. Among the components mounted on the air-conditioning device 100, the device such as the compressor 1, the outdoor fan 7, and the indoor fan 8 is referred to as the power system device 12. Most of the power supplied to the air-conditioning device 100 is typically consumed by the compressor 1 (more specifically, compressor motor 1a inside compressor 1) and the fan (more specifically, fan motor 7a inside outdoor fan 7 and fan motor 8a of indoor fan 8).

As described above, each of the compressor motor 1a of the compressor 1, the fan motor 7a of the outdoor fan 7, and the fan motor 8a of the indoor fan 8 is a three-phase AC motor. The compressor inverter device 1b, the inverter device 7b for the outdoor fan, and the inverter device 8b for the indoor fan each performs DC-AC conversion on the power from the DC power supply system 200, and supplies AC power to the corresponding motors. The compressor inverter device 1b, the inverter device 7b for the outdoor fan, and the inverter device 8b for the indoor fan are secondary power supplies of the compressor 1, the outdoor fan 7, and the indoor fan 8, respectively. At this time, it is possible to control the driving frequency relating to the AC conversion. The driving frequency is controlled by, for example, a controller. In this example, the indoor control device 40 controls the driving frequency. An upper limit of the driving frequency is particularly specified. An instruction about the driving frequency of the fan motor 7a of the outdoor fan 7 is transmitted from the indoor control device 40 to the outdoor control device 20 through the transmission line 70. Signals from the voltage detection device 30 and the current detection device 31 are transmitted to the indoor control device 40.

The air-conditioning device 100 according to Embodiment 1 uses the power directly supplied from the DC power supply system 200 of the power feeding system 400, to drive the power system device 12. Further, the air-conditioning device 100 according to Embodiment 1 uses the AC power supplied from the DC power supply system 200 of the power feeding system 400 through the power-feeding inverter device 300, to drive the accessary device 13. As descried above, when consumption of the power by the DC power supply is denoted by Wdc and consumption of the power by the AC power supply is denoted by Wac, relationship of Wdc > Wac is established because the power system device 12 consumes most of the power.

The DC power supply system 200 and the air-conditioning device 100 are connected to each other by a communication line 201. A signal that includes data relating to the power supply such as the DC voltage to be applied to the air-conditioning device 100 and the residual amount of the battery 220 in the power supplied by the DC power supply system 200 is transmitted from the DC power supply system 200 to the air-conditioning device 100. Further, the air-conditioning device 100 can control output of each of the compressor motor 1a, the fan motor 7a, and the fan motor 8a based on data relating to the power supply. The DC applied voltage relating to the power supplied from the DC power supply system 200 is 200 V or more.

As described above, the DC power supply system 200 has a system configuration that can supply power from the plurality of power supplies. Therefore, for example, even when the commercial power supply 240 is stopped, the power supply to the air-conditioning device 100 (load-side device) is not immediately stopped as the whole of the power feeding system 400. For example, in a case where the power is supplied from the battery 220, however, the voltage applied by the DC power supply system 200 is lowered depending on the charge state of the battery 220, and the time period in which the air-conditioning device 100 is continuously operable is limited depending on the output of the air-conditioning device 100.

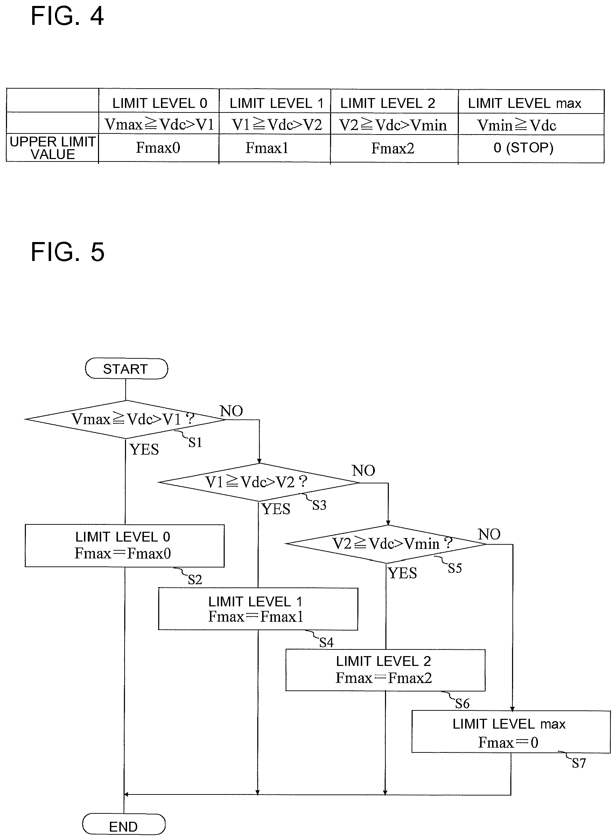

Fig. 4 is a table illustrating an example of relationship between a voltage Vdc and an upper limit value Fmax of the driving frequency F in the air-conditioning device 100 according to Embodiment 1 of the present invention. Next, processing in a case where the DC voltage applied by the DC power supply system 200 is lowered according to Embodiment 1 is described. The description is given under assumption that the indoor control device 40 performs the processing.

The indoor control device 40 monitors the DC voltage Vdc applied in the power supplied from the DC power supply system 200 to the air-conditioning device 100, based on the signal transmitted from the voltage detection device 30. Further, the indoor control device 40 performs processing to determine the upper limit value Fmax of the driving frequency F relating to the AC power to be supplied to the compressor motor 1a, the fan motor 7a, and the fan motor 8a, based on the voltage Vdc. Furthermore, the indoor control device 40 controls driving of the compressor motor 1a, the fan motor 7a, and the fan motor 8a such that the driving frequency F does not exceed the upper limit value Fmax. More specifically, the upper limit value Fmax is limited based on lowering degree of the voltage Vdc. Increase of the current due to lowering of the voltage Vdc is suppressed and overcurrent is prevented by limiting the upper limit value Fmax.

Fig. 5 is a diagram illustrating flow of processing to determine the upper limit value Fmax, performed based on the voltage Vdc of the air-conditioning device 100 according to Embodiment 1 of the present invention. An upper limit value of the voltage Vdc to be applied to the air-conditioning device 100 is referred to as an upper limit voltage Vmax, and a lower limit value thereof is referred to as a lower limit voltage Vmin. For example, as illustrated in Fig. 4, when it is determined that the voltage Vdc satisfies Vmax ≥ Vdc > V1 (step S1), the indoor control device 40 sets a limit level 0 (normal state). Further, the indoor control device 40 determines the upper limit value Fmax as FmaxO that is the maximum driving frequency in the normal state (step S2). A first predetermined voltage V1 is a voltage value as a preset threshold. The first predetermined voltage V1 is set to a value of about Vmax × 0.9. Therefore, in a case of the voltage lowering within about 10%, the operation is performed as the normal state.

When it is determined that the voltage Vdc satisfies V1 ≥ Vdc > V2 (step S3), the indoor control device 40 sets a limit level 1. Further, the indoor control device 40 determines the upper limit value Fmax as Fmax1 (step S4). A second predetermined voltage V2 is a voltage value as a preset threshold. The second predetermined voltage V2 is lower than the first predetermined voltage V1. The second predetermined voltage V2 is set to a value of about Vmax × 0.8. Further, the value Fmax1 is set to a value of about FmaxO × 0.8.

When it is determined that the voltage Vdc satisfies V2 ≥ Vdc > Vmin (step S5), the indoor control device 40 sets a limit level 2. Further, the indoor control device 40 determines the upper limit value Fmax as Fmax2 (step S6). The lower limit voltage Vmin is set to, for example, a value of about Vmax × 0.7. Further, the value Fmax2 is set to a value of about FmaxO × 0.7.

When the voltage Vdc is not any of the above-described voltage values, and Vdc ≤ Vmin is satisfied, the indoor control device 40 sets a limit level max. At this time, the driving frequency F is set to O, and the compressor motor 1a, the fan motor 7a, and the fan motor 8a are stopped (step S7). Further, for example, a signal indicating that the air-conditioning device 100 is in an abnormal stop state is transmitted to, for example, the other controller or a host building management system (not illustrated), to cause notification. Further, in a case where the air-conditioning device 100 includes, for example, a remote controller, notification may be displayed on a display device included in the remote controller.

In the air-conditioning device 100 according to Embodiment 1, the four stages of the limit levels, namely, the limit level O, the limit level 1, the limit level 2, and the limit level max are set depending on the voltage Vdc, and the upper limit value Fmax corresponding to each level is set. The number of stages, however, is not limited, and the number of stages may be changed depending on, for example, application. At this time, the upper limit value Fmax set for each of the limit levels is preferably set to about FmaxO × Vdc/Vmax.

Further, based on the voltage detected by each of a driving system and a fan motor driving system of the compressor 1, the above-described output limitation of the voltage Vdc may be performed for each of the systems. Further, the output limitation for each of the systems may be performed based on the voltage detected before the systems are branched inside the air-conditioning device 100.

As described above, according to the air-conditioning device 100 of Embodiment 1, the indoor control device 40 determines the upper limit value Fmax of the driving frequency F based on the voltage Vdc applied by the DC power supply system 200. Therefore, when the voltage Vdc applied by the DC power supply system 200 is lowered, it is possible to suppress increase of the flowing current by suppressing the upper limit value Fmax. Accordingly, the operation is not immediately stopped, and it is possible to continue the operation until the voltage becomes the operable lower limit.

### Embodiment 2 not in accordance with the present invention.

In Embodiment 1 described above, the upper limit value Fmax of the driving frequency F relating to the compressor motor 1a, the fan motor 7a, and the fan motor 8a is limited based on the voltage Vdc relating to the power supply from the DC power supply system 200. In Embodiment 2, control of the upper limit value Fmax relating to the compressor motor 1a, the fan motor 7a, and the fan motor 8a based on a current relating to the power supply from the DC power supply system 200 is described. Embodiment 2 is not an embodiment of the present invention but helpful for understanding certain aspects thereof. In the following, differences with the air-conditioning device 100 according to Embodiment 1 are described. The configurations of the components are the same as the configurations of the components in Embodiment 1.

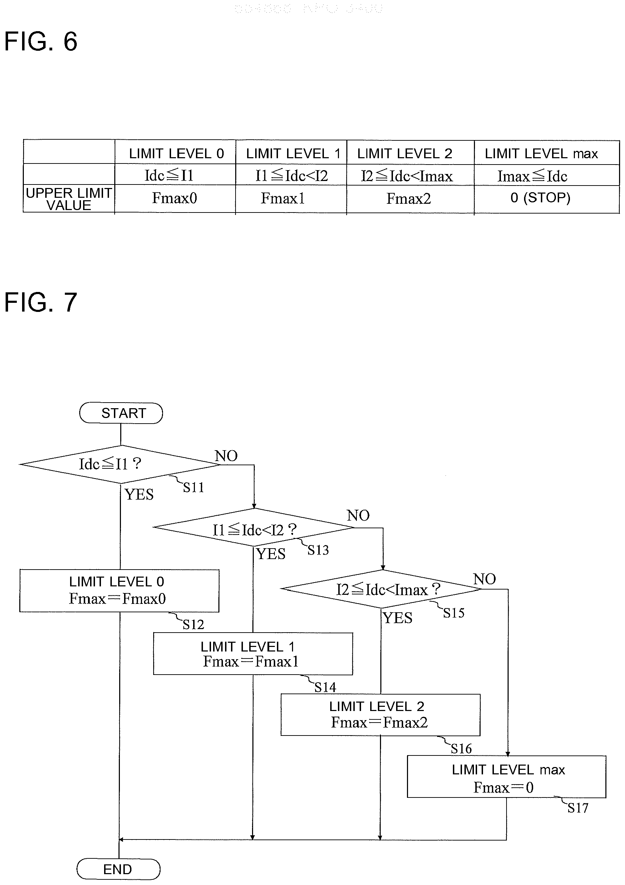

Fig. 6 is a table illustrating an example of relationship between a current Idc and the upper limit value Fmax of the driving frequency in the air-conditioning device 100 according to Embodiment 2. Next, processing in a case where the DC voltage applied by the DC power supply system 200 is lowered according to Embodiment 2 is described. The description is given under assumption that the indoor control device 40 performs the processing.

The indoor control device 40 monitors the current Idc supplied from the DC power supply system 200 to the air-conditioning device 100, based on the signal transmitted from the current detection device 31. Further, the indoor control device 40 performs processing to limit the upper limit value Fmax of the driving frequency F relating to the AC power to be supplied to the compressor motor 1a, the fan motor 7a, and the fan motor 8a, based on the increase degree of the current Idc. Furthermore, the indoor control device 40 controls driving of the compressor motor 1a, the fan motor 7a, and the fan motor 8a such that the driving frequency F does not exceed the upper limit value Fmax. Increase of the current due to lowering of the voltage Vdc is suppressed and overcurrent is prevented by limiting the upper limit value Fmax.

Fig. 7 is a diagram illustrating flow of processing to determine the upper limit value Fmax, performed based on the current Idc of the air-conditioning device 100 according to Embodiment 2. An upper limit value of the flowing current Idc during the normal operation of the air-conditioning device 100 is referred to as an upper limit current Imax. The upper limit current Imax corresponds to overcurrent in the compressor inverter device 1b, the inverter device 7b for the outdoor fan, and the inverter device 8b for the indoor fan. When the current equal to or larger than the upper limit current Imax flows, driving of the compressor 1, the outdoor fan 7, and the indoor fan 8 is stopped. For example, as illustrated in Fig. 7, when it is determined that the current Idc satisfies Idc < 11 (step S11), the indoor control device 40 sets a limit level 0 (normal state). Further, the indoor control device 40 determines the upper limit value Fmax as FmaxO that is the maximum driving frequency in the normal state (step S12). A first predetermined current I1 is a current value as a preset threshold. The first predetermined current 11 is set to a value at which the operation is performed in the normal state even when the voltage Vdc applied by the DC power supply system 200 is lowered by about 10%. For example, the first predetermined current I1 is set to a value of about Imax × 0.7.

When it is determined that the current Idc satisfies I1 ≤ Idc < I2 (step S13), the indoor control device 40 sets a limit level 1. Further, the indoor control device 40 determines the upper limit value Fmax as Fmax1 (step S14). A second predetermined current I2 is a current value as a preset threshold. The second predetermined current I2 is set to a value of about Imax × 0.8. Further, the value Fmax1 is set to a value of about FmaxO × 0.9.

When it is determined that the current Idc satisfies I2 ≤ Idc < Imax (step S15), the indoor control device 40 sets a limit level 2. Further, the indoor control device 40 determines the upper limit value Fmax as Fmax2 (step S16). The value Fmax2 is set to a value of about FmaxO × 0.7.

When the current Idc is not any of the above-described current values, and Idc ≥ Imax is satisfied, the indoor control device 40 sets a limit level max. At this time, the driving frequency F is set to O, and the compressor motor 1a, the fan motor 7a, and the fan motor 8a are stopped (step S17). Further, for example, a signal indicating that the air-conditioning device 100 is in an abnormal stop state is transmitted to, for example, the other controller or a host building management system (not illustrated), to cause notification. Further, in a case where the air-conditioning device 100 includes, for example, a remote controller, notification may be displayed on a display device included in the remote controller.

In Embodiment 2, the four stages of the limit levels, namely, the limit level O, the limit level 1, the limit level 2, and the limit level max are set depending on the current Idc, and the upper limit value Fmax corresponding to each level is set. The number of stages, however, is not limited, and the number of stages may be changed depending on, for example, application.

Further, based on the current detected by each of the driving system and the fan motor driving system of the compressor 1, the above-described output limitation of the current Idc may be performed for each of the systems. Further, the output limitation for each of the systems may be performed based on the current detected before the systems are branched inside the air-conditioning device 100.

As described above, according to the air-conditioning device 100 of Embodiment 2, the indoor control device 40 determines the upper limit value Fmax based on the current Idc flowing from the DC power supply system 200. Therefore, when the voltage Vdc applied by the DC power supply system 200 is lowered, it is possible to suppress increase of the current. Accordingly, the operation is not immediately stopped, and it is possible to continue the operation until the voltage becomes the operable lower limit.

### Embodiment 3

In Embodiment 1 described above, the upper limit value Fmax of the compressor motor 1a, the fan motor 7a, and the fan motor 8a is limited based on the voltage Vdc relating to the power supply from the DC power supply system 200. At this time, the upper limit value Fmax may not be limited even when the voltage is lowered unless the current is overcurrent.

In the air-conditioning device 100 according to Embodiment 3, control of the upper limit value Fmax of the compressor motor 1a, the fan motor 7a, and the fan motor 8a based on the voltage Vdc and the current Idc relating to the power supply from the DC power supply system 200 is described. In the following, differences with the air-conditioning device 100 in each of Embodiment 1 and Embodiment 2 are described.

The indoor control device 40 monitors the DC voltage Vdc and the current Idc applied in the power supplied from the DC power supply system 200 to the air-conditioning device 100, based on the signal transmitted from the voltage detection device 30. In a case where the voltage Vdc is lowered to a predetermined range and the current Idc is increased near Imax that is the overcurrent level of the inverter, the indoor control device 40 performs processing to limit the upper limit value Fmax of the driving frequency F relating to the AC power to be supplied to the compressor motor 1a, the fan motor 7a, and the fan motor 8a. Further, the indoor control device 40 controls driving of the compressor motor 1a, the fan motor 7a, and the fan motor 8a such that the driving frequency F does not exceed the upper limit value Fmax. Increase of the current due to lowering of the voltage Vdc is suppressed by limiting the upper limit value Fmax.

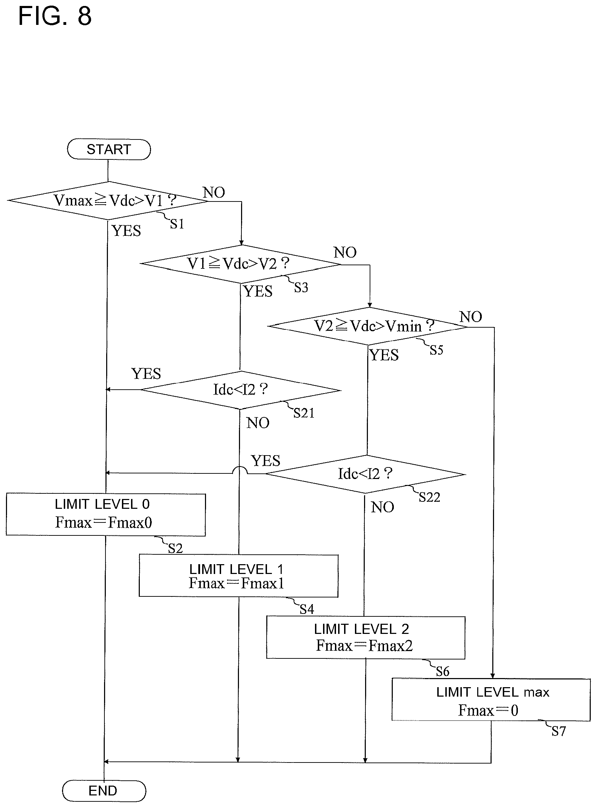

Fig. 8 is a diagram illustrating flow of processing to determine the upper limit value Fmax in the air-conditioning device 100 according to Embodiment 3 of the present invention. In Fig. 8, in a step denoted by the step number same as the step number in Fig. 5, operation similar to the operation described in Embodiment 1 is performed.

In Embodiment 3, when it is determined that the voltage Vdc satisfies V1 ≥ Vdc > V2 (step S3), it is determined whether the current Idc satisfies Idc < I2 (step S21). When it is determined that the current Idc satisfies Idc < I2, the indoor control device 40 determines the upper limit value Fmax as FmaxO (step S2). When it is determined that the current Idc does not satisfy Idc < I2, the indoor control device 40 set the limit level 1 and determines the upper limit value Fmax as Fmax 1 (step S4).

Further, when it is determined in step S5 that the voltage Vdc satisfies V2 ≥ Vdc > Vmin (step S5), it is determined whether the current Idc satisfies Idc < I2 (step S22). When it is determined that the current Idc satisfies Idc < I2, the indoor control device 40 determines the upper limit value Fmax as FmaxO (step S2). When it is determined that the current Idc does not satisfy Idc < I2, the indoor control device 40 sets the limit level 2 and determines the upper limit value Fmax as Fmax 2 (step S6).

As described above, in the air-conditioning device 100 according to Embodiment 3, the indoor control device 40 determines the upper limit value Fmax based on the voltage Vdc and the current Idc applied by the DC power supply system 200. Therefore, even when the voltage Vdc applied by the DC power supply system 200 is lowered, it is possible to suppress increase of the current. Accordingly, the operation is not immediately stopped, and it is possible to continue the operation until the voltage becomes the operable lower limit. At this time, in a case where a load factor of each of the compressor motor 1a, the fan motor 7a, and the fan motor 8a is small and the current Idc does not exceed the overcurrent level, it is possible to perform operation with high efficiency by not limiting the upper limit value Fmax.

### Embodiment 4

In each of Embodiment 1 to Embodiment 3 described above, the upper limit value Fmax of the driving frequency F is set to the same value in the compressor motor 1a, the fan motor 7a, and the fan motor 8a; however, the upper limit value Fmax is not limited thereto. The upper limit value Fmax determined by the indoor control device 40 may be different among the compressor motor 1a, the fan motor 7a, and the fan motor 8a.

Further, the thresholds for setting of the limit level, for example, the first predetermined voltage V1 and the second predetermined voltage V2 in Embodiment 1, and the first predetermined current I1 and the second predetermined current I2 in Embodiment 2 may be set to different values to determine the upper limit value Fmax of each of the compressor motor 1a, the fan motor 7a, and the fan motor 8a. Further, for example, the thresholds and other values may be set from the remote controller.

### Embodiment 5

Although not described in Embodiment 1 to Embodiment 4 described above, when the indoor control device 40 determines to perform limitation to the upper limit value Fmax to Fmax1, Fmax2, or other values, the indoor control device 40 may, for example, cause a notification device such as the display device of the remote controller to perform notification of the limitation.

Further, as described above, the signal including data relating to the power supply is transmitted from the DC power supply system 200 to the indoor control device 40 through the communication line 201. For example, when determining that the power supplied from the DC power supply system 200 is power from the battery 220 based on the signal from the DC power supply system 200, the indoor control device 40 may set the upper limit value Fmax of the driving frequency F to a preset value.

For example, in a case where a plurality of air-conditioning devices 100 receives power supplied from the power feeding system 400, priority of the air-conditioning device 100 that performs the processing to determine the upper limit value Fmax may be determined among the air-conditioning devices 100.

In Embodiment 1 to Embodiment 5 described above, the air-conditioning device 100 has been described; however, the embodiments are applicable to the other refrigeration cycle apparatus such as a refrigerator device, a freezer device, and a water heater. Further, the embodiments are applicable to control of the other motor driven device.

### Reference Signs List

1 compressor 1a compressor motor 1b compressor inverter device1c belt heater 2 outdoor heat exchanger 3 expansion valve 4 indoor heat exchanger 5 indoor solenoid valve 6 outdoor solenoid valve 7 outdoor fan
7a fan motor 7b inverter device for outdoor fan 8 indoor fan 8a fan motor 8b inverter device for indoor fan 9 pressure switch 10, 11 refrigerant pipe 12 power system device 13 accessary device 20 outdoor control device 21 indoor calculation device 30 voltage detection device 31 current detection device 40 indoor control device 41 indoor calculation device 50 outdoor unit 60 indoor unit 70 transmission line
100 air-conditioning device 101 refrigerant circuit 200 DC power supply system 201 communication line 202 DC power feeding device 203 voltage converter 204 AC power supply 205 DC power supply 220 battery
230 solar power generation power supply 240 commercial power supply
250 private power generation power supply 300 power-feeding inverter device 400 power feeding system

## Claims

1. A refrigeration cycle apparatus that includes a power feeding system (400) and a refrigerant circuit in which a compressor (1), a condenser, an expansion device (3), and an evaporator are connected by pipes to circulate refrigerant and performs operation by receiving supply of DC power from the power feeding system (400), the refrigeration cycle apparatus comprising:
a compressor inverter device (1b) that performs DC-AC conversion and supplies power to a compressor motor (1a);
a fan motor inverter device (7b) that performs DC-AC conversion and supplies power to a fan motor (7a); and
a voltage detection device (30) that detects an applied DC voltage;
**characterized in that** the refrigeration cycle apparatus further comprises a controller (20) configured to perform processing to determine an upper limit value of a driving frequency output from at least one of the compressor inverter device (1b) and the fan motor inverter device (7b), based on the voltage detected by the voltage detection device (30),
and **in that**
the power feeding system (400) includes a plurality of power sources including a battery,
the controller (20) is connected to the power feeding system (400) to be able to communicate with the power feeding system (400), the power feeding system (400) being configured to supply power to the refrigeration cycle apparatus, the controller (20) being configured to determine the upper limit value to be a preset upper limit value of the driving frequency when determining that the power supplied from the power feeding system (400) is power from the battery, and
the controller (20) is configured to control driving of the compressor motor (1a) and the fan motor (7a) such that the driving frequency does not exceed the upper limit value.

2. The refrigeration cycle apparatus of claim 1, further comprising a current detection device (31) that detects a current of the DC power, wherein
when determining that the voltage detected by the voltage detection device (30) is within a preset range, the controller (20) further performs processing to determine the upper limit value of the driving frequency, based on the current detected by the current detection device (31).

3. The refrigeration cycle apparatus of claim 1 or 2, wherein when determining the upper limit value of the driving frequency to a value other than a maximum driving frequency in normal operation, the controller (20) performs processing to cause a notification device to perform notification.

4. The refrigeration cycle apparatus of any one of claims 1 to 3, wherein the power sources included in the power feeding system (400) include besides the battery at least one of a commercial power supply (240), a private power generation power supply (250) and a DC power supply (205).

5. The refrigeration cycle apparatus of claim 4, wherein the DC power supply (205) is a solar power generation power supply (230).

## Patentansprüche

1. Kältekreislaufvorrichtung, die ein Energieversorgungssystem (400) und einen Kältemittelkreislauf enthält, in dem ein Verdichter (1), ein Kondensator, eine Expansionseinrichtung (3) und ein Verdampfer durch Leitungen verbunden sind, um Kältemittel zu zirkulieren, und die durch Empfangen einer Zufuhr von Gleichstromenergie von dem Energieversorgungssystem (400) einen Betrieb durchführt, wobei die Kältekreislaufvorrichtung umfasst:
eine Verdichter-Wechselrichtereinrichtung (1b), die eine Gleichstrom-Wechselstrom-Umwandlung durchführt und einem Verdichtermotor (1a) Energie zuführt;
eine Lüftermotor-Wechselrichtereinrichtung (7b), die eine Gleichstrom-Wechselstrom-Umwandlung durchführt und einem Lüftermotor (7a) Energie zuführt; und
eine Spannungserfassungseinrichtung (30), die eine angelegte Gleichspannung erfasst;
**dadurch gekennzeichnet, dass** die Kältekreislaufvorrichtung ferner eine Steuerung (20) umfasst, die eingerichtet ist, eine Verarbeitung durchzuführen, um einen oberen Grenzwert einer Antriebsfrequenz zu bestimmen, die von mindestens einer der Verdichter-Wechselrichtereinrichtung (1b) und der Lüftermotor-Wechselrichtereinrichtung (7b) ausgegeben wird, auf der Grundlage der von der Spannungserfassungseinrichtung (30) erfassten Spannung,
und darin, dass
das Energieversorgungssystem (400) eine Vielzahl von Energiequellen einschließlich einer Batterie aufweist,
die Steuerung (20) mit dem Energieversorgungssystem (400) verbunden ist, um mit dem Energieversorgungssystem (400) kommunizieren zu können, wobei das Energieversorgungssystem (400) eingerichtet ist, die Kältekreislaufvorrichtung mit Energie zu versorgen, wobei die Steuerung (20) eingerichtet ist, den oberen Grenzwert als einen voreingestellten oberen Grenzwert der Antriebsfrequenz zu bestimmen, wenn bestimmt wird, dass es sich bei der von dem Energieversorgungssystem (400) zugeführten Energie um Energie von der Batterie handelt, und
die Steuerung (20) eingerichtet ist, den Antrieb des Verdichtermotors (1a) und des Lüftermotors (7a) so zu steuern, dass die Antriebsfrequenz den oberen Grenzwert nicht überschreitet.

2. Kältekreislaufvorrichtung nach Anspruch 1, ferner umfassend eine Stromerfassungseinrichtung (31), die einen Strom der Gleichstromenergie erfasst, wobei
wenn bestimmt wird, dass die von der Spannungserfassungseinrichtung (30) erfasste Spannung innerhalb eines voreingestellten Bereichs liegt, die Steuerung (20) ferner eine Verarbeitung durchführt, um den oberen Grenzwert der Antriebsfrequenz auf der Grundlage des von der Stromerfassungseinrichtung (31) erfassten Stroms zu bestimmen.

3. Kältekreislaufvorrichtung nach Anspruch 1 oder 2, wobei, wenn der obere Grenzwert der Antriebsfrequenz auf einen anderen Wert als eine maximale Antriebsfrequenz im Normalbetrieb bestimmt wird, die Steuerung (20) eine Verarbeitung durchführt, um eine Benachrichtigungseinrichtung zu veranlassen, eine Benachrichtigung durchzuführen.

4. Kältekreislaufvorrichtung nach einem der Ansprüche 1 bis 3, wobei die im Energieversorgungssystem (400) enthaltenen Stromquellen neben der Batterie mindestens eine von einer kommerziellen Energieversorgung (240), einer privaten Energieerzeugungsenergieversorgung (250) und einer Gleichstromenergieversorgung (205) umfassen.

5. Kältekreislaufvorrichtung nach Anspruch 4, wobei die Gleichstromenergieversorgung (205) eine Solarenergieerzeugungsenergieversorgung (230) ist.

## Revendications

1. Appareil à cycle frigorifique qui comprend un système d'alimentation en énergie (400) et un circuit de fluide frigorigène dans lequel un compresseur (1), un condenseur, un dispositif d'expansion (3) et un évaporateur sont reliés par des tuyaux pour faire circuler le fluide frigorigène et fonctionne en recevant une alimentation en courant continu du système d'alimentation en énergie (400), l'appareil à cycle frigorifique comprenant :
un dispositif onduleur de compresseur (1b) qui effectue une conversion DC-AC et fournit de l'énergie à un moteur de compresseur (1a) ;
un dispositif onduleur de moteur de ventilateur (7b) qui effectue une conversion DC-AC et fournit de l'énergie à un moteur de ventilateur (7a) ; et
un dispositif de détection de tension (30) qui détecte une tension continue appliquée ;
**caractérisé en ce que** l'appareil à cycle frigorifique comprend en outre un dispositif de commande (20) configuré pour effectuer un traitement afin de déterminer une valeur limite supérieure d'une fréquence d'entraînement de sortie d'au moins l'un du dispositif onduleur de compresseur (1b) et du dispositif onduleur de moteur de ventilateur (7b), sur la base de la tension détectée par le dispositif de détection de tension (30),
et dans ce
le système d'alimentation en énergie (400) comprend une pluralité de sources d'énergie incluant une batterie,
le dispositif de commande (20) est connecté au système d'alimentation en énergie (400) pour pouvoir communiquer avec le système d'alimentation en énergie (400), le système d'alimentation en énergie (400) étant conçu pour fournir de l'énergie à l'appareil à cycle frigorifique, le dispositif de commande (20) étant conçu pour déterminer la valeur limite supérieure comme étant une valeur limite supérieure prédéfinie de la fréquence d'entraînement lorsqu'il détermine que l'énergie fournie par le système d'alimentation en énergie (400) est une énergie provenant de la batterie, et
le dispositif de commande (20) est conçu pour commander l'entraînement du moteur de compresseur (1a) et du moteur de ventilateur (7a) de telle sorte que la fréquence d'entraînement ne dépasse pas la valeur limite supérieure.

2. Appareil à cycle frigorifique selon la revendication 1, comprenant en outre un dispositif de détection de courant (31) qui détecte un courant de l'alimentation en courant continu, dans lequel
lorsqu'il détermine que la tension détectée par le dispositif de détection de tension (30) se situe dans une plage prédéfinie, le dispositif de commande (20) effectue en outre un traitement pour déterminer la valeur limite supérieure de la fréquence d'entraînement, sur la base du courant détecté par le dispositif de détection de courant (31).

3. Appareil à cycle frigorifique selon la revendication 1 ou 2, dans lequel, lors de la détermination de la valeur limite supérieure de la fréquence d'entraînement à une valeur autre qu'une fréquence d'entraînement maximale en fonctionnement normal, le dispositif de commande (20) effectue un traitement pour amener un dispositif de notification à effectuer une notification.

4. Appareil à cycle frigorifique selon l'une quelconque des revendications 1 à 3, dans lequel les sources d'énergie incluses dans le système d'alimentation en énergie (400) comprennent, outre la batterie, au moins l'une d'une alimentation en énergie commerciale (240), d'une alimentation en énergie par génération d'énergie privée (250) et d'une alimentation en énergie en courant continu (205).

5. Appareil à cycle frigorifique selon la revendication 4, dans lequel l'alimentation en courant continu (205) est une alimentation en énergie par génération d'énergie solaire (230).
